# FASCICULE DE BREVET EUROPEEN

(11) **EP 3 787 934 B1**
(45) Date de publication et mention de la délivrance du brevet: **18.02.2026**
(21) Numéro de dépôt: 19722826.5
(22) Date de dépôt: 29.04.2019
(51) Int. Cl.: B60R 13/04, B60R 13/02

(54) **PIÈCE DE CARROSSERIE À RELIEFS INTERNES**
KAROSSERIETEIL MIT INNENRELIEFS
BODYWORK PART WITH INTERNAL RELIEFS

(30) Priorité: 30.04.2018 FR 1800396
(43) Date de publication de la demande: 10.03.2021
(73) Titulaire: OPmobility SE, 69007 Lyon (FR)
(72) Inventeur: STABLO, Frédéric, 38390 Porcieu Amblagnieu (FR)
(74) Mandataire: LLR
(86) Numéro de dépôt international: PCT/EP2019/060981
(87) Numéro de publication internationale: WO 2019/211252

(56) Documents cités:
- US-A1- 2004 125 023
- US-A1- 2014 093 665

## Description

L'invention concerne les pièces de carrosserie pour véhicule automobile. Notamment les pièces comportant des éléments ayant une apparence en trois dimensions.

De nombreux éléments en relief formant saillie de pièces de carrosserie sont également souvent présents sur celles-ci, tels des logos du constructeur ou des inscriptions.

Ces éléments présentent l'inconvénient d'être exposés aux dégradations dues à des éléments externes, au véhicule. Une mise en vernis peut s'avérer nécessaire afin de protéger ces éléments de ces dégradations.

Ils sont également difficiles à nettoyer, car des salissures ont tendance à venir se coincer dans les reliefs.

Enfin, des éléments en relief trop saillants sont interdits pour des raisons de sécurité, risquant de blesser des piétons en cas de choc.

Ces éléments en relief forment une partie indispensable de l'esthétique générale du véhicule.

Pour pallier à ces inconvénients, il existe des feuilles adhésives que l'on colle sur les pièces de carrosserie pour donner un effet de relief à certaines parties de la pièce de carrosserie afin d'améliorer son aspect esthétique général. Ces feuilles adhésives peuvent présenter des motifs avec différentes couleurs.

Ces feuilles adhésives présentent l'inconvénient d'être très fragiles et difficiles à poser correctement, sans bulle, pli et sur le bon emplacement. Les motifs en relief ne sont pas protégés du milieu extérieur. Par exemple, lors d'un nettoyage, notamment en utilisant un jet d'eau à haute pression, cet adhésif peut se décoller de la pièce de carrosserie.

De même, la maintenance d'une telle pièce adhésive rapportée sur la pièce de carrosserie est très compliquée, car il faut décoller l'adhésif, qui peut abimer la surface sur laquelle il était déposé, et ensuite préparer cette surface pour la pose d'un nouvel adhésif. Ceci est d'autant plus problématique que les feuilles adhésives vieillissent, par exemple en changeant de couleur, ou en se déformant et ne peuvent généralement pas durer toute la durée de vie du véhicule sans être changées.

Le document US 2014/093665 divulgue une pièce de carrosserie pour un véhicule automobile selon le préambule de la revendication 1.

L'invention a pour but de proposer une pièce de carrosserie ayant un aspect en relief et surmontant les inconvénients précités.

L'invention a donc pour objet une pièce de carrosserie pour un véhicule automobile avec les caractéristiques de la revendication 1 qui comprend un élément transparent ou translucide comprenant une première surface destinée à être tournée vers l'extérieur du véhicule et une seconde surface, opposée à la première surface, qui comprend au moins une zone en relief et une zone non en relief. Elle comprend également au moins un premier revêtement recouvrant au moins en partie seulement la zone en relief de l'élément transparent ou translucide, et au moins un second revêtement recouvrant au moins en partie la zone non en relief, le second revêtement ayant une couleur différente du premier revêtement.

De cette manière, la zone en relief ne forme pas la surface externe de la pièce de carrosserie. Le relief visible de l'extérieur est formé à la fois par la deuxième surface de l'élément transparent et par les revêtements la recouvrant.

Ainsi, la pièce de carrosserie présente des reliefs qui sont protégés du milieu extérieur. Ils sont ainsi plus solides, ce qui permet à la pièce de carrosserie de garder un aspect extérieur convenable plus longtemps.

De plus, la pièce est bien plus facile à nettoyer qu'une pièce avec un relief sur l'extérieur. En effet, des saletés peuvent se nicher dans les recoins de reliefs externes d'une pièce avec un relief sur l'extérieur, ce qui rend le nettoyage très difficile. Dans la pièce de carrosserie selon l'invention, le relief n'étant pas situé sur la surface externe, il ne se salit pas. C'est la surface externe de l'élément de transparence, qui peut avoir toute une variété de forme et d'états de surface, qui est exposé aux salissures.

Enfin, les reliefs n'étant pas situés sur l'extérieur de la pièce, ceux-ci ne forment pas d'éléments saillants qui seraient gênant en termes de sécurité lors d'un contact avec un piéton.

La pièce de carrosserie peut en outre comporter l'une ou plusieurs des caractéristiques suivantes, prises seules ou en combinaison :
- le premier revêtement est encapsulé entre le second revêtement et la seconde surface de l'élément transparent ou translucide ;
- le second revêtement comprend au moins une couche de peinture ;
- la pièce de carrosserie comprend un corps principal en matière plastique dans lequel est surmoulé l'élément transparent ou translucide.

L'invention concerne également une face avant de véhicule automobile qui comporte une pièce de carrosserie selon l'invention.

L'invention concerne également un véhicule automobile équipé d'une pièce de carrosserie selon l'invention.

L'invention concerne également un procédé de fabrication d'une pièce de carrosserie de véhicule automobile selon l'invention. Le procédé comprend les étapes de :
- moulage par injection de l'élément transparent ou translucide ;
- surmoulage du premier revêtement sur l'élément transparent ou translucide ;
- pose du second revêtement.

Selon un mode de réalisation, la pose du second revêtement est réalisée par pulvérisation d'une couche de peinture sur la seconde surface de l'élément transparent ou translucide. Le procédé peut alors en outre comprendre les étapes de :
- retrait d'une partie de la couche de peinture composant le second revêtement de la pièce de carrosserie par grattage laser ;
- pose d'un troisième revêtement recouvrant des zones où l'on a retiré une partie de la couche de peinture composant le second revêtement.

Selon un autre mode de réalisation, la pose du second revêtement est réalisée par surmoulage du second revêtement sur l'élément transparent ou translucide.

Le procédé peut en outre comprendre une étape de pose d'un troisième revêtement réalisée :
- soit par pulvérisation d'une couche de peinture sur la seconde surface de l'élément transparent ou translucide ;
- soit par injection de matière plastique surmoulant la seconde surface et les premier et second revêtements, l'injection étant réalisée de façon à former au moins une zone de la pièce de carrosserie ayant une épaisseur constante et apte à avoir une fonction de radome.

Dans ce qui suit, les termes tels que « axe longitudinal X », « axe transversal Y », « axe vertical Z », « avant », « arrière », « au-dessus », « supérieur », « en-dessous », « inférieur », etc. s'entendent par référence à l'orientation usuelle des véhicules automobiles selon les repères représentés sur les figures.

Nous allons maintenant présenter un mode de réalisation de l'invention donné à titre d'exemple non limitatif et à l'appui des figures annexées dans lesquelles :
- la figure 1 est une vue en coupe d'une pièce de carrosserie selon l'invention ;
- la figure 2 est une vue en coupe de la pièce de carrosserie de la figure 1 lors de sa fabrication.

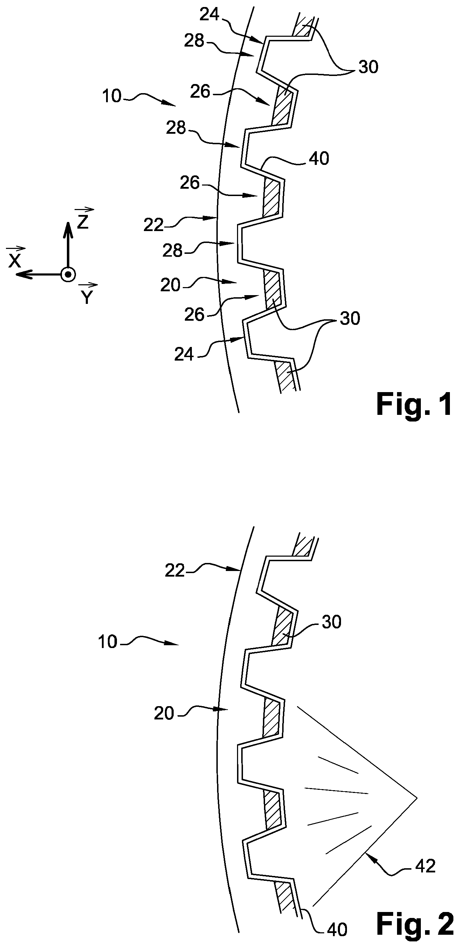

On se réfère maintenant à la figure 1 qui est une section partielle d'une pièce de carrosserie selon l'invention, selon un plan normal à l'axe transversal Y du véhicule lorsque la pièce est montée sur un véhicule automobile.

Cette pièce de carrosserie comprend un élément transparent ou translucide 20. Cet élément 20 est ici composé de matière plastique. Cet élément est de manière générale composée de matière thermoplastique, de préférence du polycarbonate, du polyméthacrylate de méthyle, ou encore du polypropylène, ou bien à base de polyoléfine amorphe telle que les cyclo-oléfines-copolymères (COC) et cyclo-oléfines-polymères (COP). Cette matière plastique est transparente ou translucide. Par transparente on entend une matière transmettant la lumière par réfraction et au travers de laquelle des objets sont visibles avec netteté. Par translucide, on entend une matière transmettant la lumière de manière diffuse et au travers de laquelle des objets apparaissent flous.

Cet élément 20 comprend une première surface 22 qui est destinée à être tournée vers l'extérieur du véhicule, lorsque la pièce 10 est montée sur un véhicule automobile. Cette première surface (22) est ici légèrement incurvée, mais peut tout à fait, de manière alternative, être plane ou de tout autre forme. La première surface 22 est sensiblement lisse, c'est-à-dire que cette surface 22 est sans aspérité. De manière alternative, elle peut être légèrement rugueuse, c'est-à-dire présenter de petites aspérités. Le fait que cette surface 22 soit lisse, ou ne soit que légèrement rugueuse, permet de faciliter le nettoyage de salissures déposées sur celle-ci, notamment de la boue, de la poussière, ou des insectes écrasés sur celle-ci. La rugosité peut aussi apporter un effet de texture et/ou un effet diffusant de la lumière.

L'élément de transparence comprend une deuxième surface 24, qui est opposée à la première surface 22. Cette deuxième surface 24 comprend ici plusieurs zones en relief 26. Par zone en relief, on entend une zone qui fait saillie d'une surface. Ici, les zones en relief 26 font saillie de la deuxième surface 24. Cette deuxième surface 24 comprend également des zones non en relief 28 qui sont au niveau de la surface 24. Ici, les reliefs sur l'élément transparent ou translucide 20 présentent un profil en forme de créneau, mais peuvent toutefois prendre toute sorte de formes, comme nous le verrons plus tard.

Un premier revêtement 30 recouvre au moins en partie seulement les zones en relief 26. Ce revêtement présent sur les zones en relief 26 mais n'est pas présent sur les zones non en relief 28 de l'élément 20. Dans ce mode de réalisation de l'invention, le second revêtement recouvre entièrement une partie sommitale de chaque zone en relief 26. De manière alternative, ce premier revêtement peut recouvrir seulement certaines zones en relief 26, sans les recouvrir toutes. Il peut aussi recouvrir entièrement lesdites zones 26.

Le premier revêtement 30 est opaque. Par opaque on entend qu'il ne laisse pas ou peut passer la lumière. Ce premier revêtement 40 est d'une couleur qui peut être toute sorte de couleur qui aura été choisie par l'homme du métier.

Un second revêtement 40 recouvre au moins en partie la zone non en relief 40. Ainsi, il recouvre des zones de la deuxième surface 40 qui ne sont pas recouvertes par le premier revêtement 30.

Le second revêtement 40 est, comme le premier revêtement, opaque. Ce deuxième revêtement est d'une deuxième couleur qui est différente de la couleur du premier revêtement 30. Par couleur différente, on entend une couleur qui peut être distinguée à I'œil nu de la couleur du premier revêtement 30.

Du fait de la transparence de l'élément transparent ou translucide 20, les premier et deuxième revêtements 30, 40 sont visibles à travers l'élément 20. La pièce de carrosserie 10 laisse apparaître, lorsqu'elle est observée par la première surface 22, les zones en relief 26 ainsi que les zones non en relief 28, et les revêtements 30, 40 qui les recouvrent. Ces reliefs apparaissent de plus clairement en raison de la différence de couleur visible entre les zones en relief 26 et les zone non en relief 28. On voit donc, derrière la première surface 22, qui est lisse ou peu rugueuse, des reliefs en couleur, ce qui confère à la pièce un effet en trois dimensions. Les reliefs 26 et 28 sont de plus au cœur de la pièce de carrosserie 10 et sont donc protégés des salissures et des dégradations dues à des éléments extérieurs venant frapper la pièce de carrosserie 10. On a donc une pièce de carrosserie 10 ayant une première surface 22 vers l'extérieur qui est facile à nettoyer du fait de sa faible rugosité, et des reliefs qui sont protégés.

Le premier revêtement 30 est ici constitué de matière plastique qui est posée directement sur la seconde surface 24. Il pourrait tout aussi bien être composé d'un autre matériau rapporté sur l'élément transparent ou translucide 20.

Ce premier revêtement 30 est surmoulé sur la seconde surface 24 de l'élément transparent ou translucide 20. Ainsi, il est moulé directement sur cet élément 20, ce qui permet une production plus rapide et moins onéreuse que si le premier revêtement était moulé à part puis rapporté, par exemple par collage, sur l'élément transparent ou translucide 20.

Dans le mode de réalisation présenté, le premier revêtement 30 est encapsulé entre la seconde surface 24 de l'élément transparent ou translucide 20 et le second revêtement 40. De cette façon, la seconde surface 24 est complètement recouverte par les deux revêtements 30, 40. On a donc une absence d'interstices sur cette seconde surface 24, ce qui permet d'avoir l'effet en trois dimensions pour un observateur extérieur sur toute la pièce de carrosserie 10.

Le second revêtement 40 comprend une couche de peinture. Il est même, de manière préférentielle constitué uniquement de cette couche de peinture. De cette façon, le concepteur peut de manière aisée choisir la couleur de celui-ci. Egalement, la pose d'une couche de peinture permet de recouvrir totalement et de manière uniforme la seconde surface 24 et le premier revêtement 30.

On peut noter qu'il est également possible que le second revêtement ne recouvre que partiellement la seconde surface 24 de la pièce de carrosserie 10 et le premier revêtement 30. Dans ce cas, il est possible que la pièce 10 comprenne un troisième revêtement recouvrant au moins en partie, ou bien totalement la seconde surface 24 de l'élément 20 ainsi que les premiers et seconds revêtements 30, 40. On peut même, selon le même principe, avoir 4, 5, 6 7 8 ou 9 revêtements différents recouvrant la seconde surface 24 de l'élément 20.

La combinaison des zones en relief 26 et non en relief 28 avec les revêtements les recouvrant permet de créer toute sortes de motifs et de formes en trois dimensions dans la pièce de carrosserie 10 facilement. On peut par exemple représenter le logo du constructeur dans la pièce 10.

La pièce de carrosserie 10 est destinée à une face avant de véhicule automobile. Plus particulièrement, elle est particulièrement adaptée pour former la calandre de cette face avant du véhicule, en raison des reliefs apparents, de sa solidité, et de sa facilité de nettoyage. Toutefois, une pièce de carrosserie selon l'invention peut être disposée en toute sorte de parties du véhicule. On peut imaginer qu'elle soit disposée sur un de ses flancs, sur une aile, en partie arrière, ou sur toute autre partie de la carrosserie.

Nous allons maintenant décrire le procédé de fabrication de la pièce de carrosserie 10 à l'appui des figures 1 et 2.

La première étape de la fabrication consiste à mouler par injection l'élément transparent ou translucide 20. Le moulage par injection permet d'obtenir toute une variété de formes différentes pour cet élément 10, et de créer les zones en relief 26 et les zones non en relief 28, selon les formes désirées.

Ensuite, on surmoule le premier revêtement sur l'élément transparent ou translucide 20. Plus précisément, ce surmoulage est effectué sur une ou plusieurs des zones en relief 26 de la seconde surface 24 de l'élément 20.

Enfin, on pose le second revêtement 40, de manière à ce qu'il recouvre au moins en partie la zone non en relief 28 de la seconde surface 24.

Ce procédé de fabrication est particulièrement simple et rapide à mettre en œuvre et permet d'avoir des éléments en trois dimensions à distance de la première surface 22 de l'élément transparent ou translucide 20.

De manière préférentielle, le second revêtement 40 comprend une couche de peinture qui est pulvérisée sur l'élément 20. La figure 2 illustre la pulvérisation du second revêtement 40, comme en atteste la peinture pulvérisée 42.

Avec cette pulvérisation, on obtient un second revêtement 40 qui est une couche de peinture, et qui recouvre de manière uniforme la seconde surface 24.

De manière préférentielle, on retire en partie le second revêtement de la pièce de carrosserie 10. Le retrait partiel du second revêtement 40 est réalisé par grattage de celui-ci. Ce grattage peut être réalisé à l'aide d'un laser orienté sur les zones où l'on souhaite retirer le second revêtement. Le retrait par laser permet est un processus qui est rapide et permet d'obtenir un retrait précis d'une partie du second revêtement 40. Le retrait peut également être réalisé par abrasion.

Il est possible ensuite de recouvrir le second revêtement d'un ou plusieurs revêtements additionnels, qui peuvent eux aussi être grattés (par laser ou pas) comme l'a été le second revêtement précédemment. La superposition de tous ces revêtements successifs permet de créer des motifs précis et en trois dimensions à l'intérieur de la pièce.

Selon un mode de réalisation, le dernier revêtement consiste en une couche de peinture. Cela permet de recouvrir toute la face arrière avec une pulvérisation de peinture ce qui est un procédé simple à mettre en œuvre. Seules les zones de la surface 24 qui n'étaient pas recouverte par le(s) revêtement(s) précédent(s) présenteront la couleur de la peinture de ce dernier revêtement à travers l'élément 20.

Selon un autre mode de réalisation, le dernier revêtement est une injection de matière plastique qui vient surmouler la surface 24 et le(s) revêtement(s) précédent(s), tout en permettant à la pièce d'avoir une épaisseur constante dans une certaine zone, qui pourra avoir la fonction de radome. Cela permet d'utiliser ce type de pièce devant un radar, l'atténuation des ondes étant minimisée grâce à cette épaisseur constante et l'absence d'interstice entre les différents revêtements.

L'invention n'est pas limitée aux modes de réalisation présentés et d'autres modes de réalisation apparaîtront clairement à l'homme du métier.

On peut par exemple avoir une pièce comprenant un corps principal en matière plastique dans lequel est surmoulé l'élément transparent ou translucide.

### NOMENCLATURE

- 10 :: pièce de carrosserie
- 20 :: élément transparent ou translucide
- 22 :: première surface de l'élément transparent ou translucide
- 24 :: seconde surface de l'élément transparent ou translucide
- 26 :: zone en relief
- 28 :: zone non en relief
- 30 :: premier revêtement
- 40 :: second revêtement
- 42 :: peinture pulvérisée

## Revendications

1. Pièce de carrosserie (10) pour un véhicule automobile, **caractérisée en ce qu'**elle comprend :
- un élément transparent ou translucide (20) comprenant une première surface (22) destinée à être tournée vers l'extérieur du véhicule, et une seconde surface (24) opposée à la première surface (22), ladite seconde surface (24) comprend au moins une zone en relief (26) et une zone non en relief (28) ;
- au moins un premier revêtement (30) recouvrant au moins en partie seulement la zone en relief (26) de l'élément transparent ou translucide (20).
- au moins un second revêtement (40) recouvrant au moins en partie la zone non en relief (28), le second revêtement (40) ayant une couleur différente de la couleur du premier revêtement (30), le premier revêtement (30) étant constitué de matière plastique, **caractérisée en ce que** le premier revêtement (30) est surmoulé sur l'élément transparent ou translucide (20).

2. Pièce de carrosserie (10) selon l'une des revendications précédentes, dans laquelle le premier revêtement (30) est encapsulé entre le second revêtement (40) et la seconde surface (24) de l'élément transparent ou translucide (20).

3. Pièce de carrosserie (10) selon l'une des revendications précédentes, dans laquelle le second revêtement (40) comprend au moins une couche de peinture.

4. Pièce de carrosserie (10) selon l'une des revendications précédentes, comprenant un corps principal en matière plastique dans lequel est surmoulé l'élément transparent ou translucide (20).

5. Face avant de véhicule automobile qui comporte une pièce de carrosserie (10) selon l'une des revendications précédentes.

6. Véhicule automobile équipé d'une pièce de carrosserie (10) selon l'une des revendications précédentes 1 à 4.

7. Procédé de fabrication d'une pièce de carrosserie de véhicule automobile selon l'une des revendications 1 à 4 **caractérisé en ce qu'**il comprend les étapes de :
- moulage par injection de l'élément transparent ou translucide (20) ;
- surmoulage du premier revêtement (30) sur l'élément transparent ou translucide (20) ;
- pose du second revêtement (40).

8. Procédé de fabrication selon la revendication précédente, dans lequel la pose du second revêtement (40) est réalisée par pulvérisation d'une couche de peinture sur la seconde surface (24) de l'élément transparent ou translucide (20).

9. Procédé de fabrication selon la revendication précédente qui comprend en outre les étapes de :
- retrait d'une partie de la couche de peinture composant le second revêtement (40) de la pièce de carrosserie (10) par grattage laser ;
- pose d'un troisième revêtement recouvrant des zones où l'on a retiré une partie de la couche de peinture composant le second revêtement (40).

10. Procédé de fabrication selon la revendication 7, dans lequel la pose du second revêtement (40) est réalisée par surmoulage du second revêtement (30) sur l'élément transparent ou translucide (20).

11. Procédé de fabrication selon l'une des revendications 7 à 10, comprenant en outre une étape de pose d'un troisième revêtement réalisée par pulvérisation d'une couche de peinture sur la seconde surface (24) de l'élément transparent ou translucide (20).

12. Procédé de fabrication selon l'une des revendications 7 à 10, comprenant en outre une étape de pose d'un troisième revêtement réalisée par injection de matière plastique surmoulant la seconde surface (24) et les premier et second revêtements, l'injection étant réalisée de façon à former au moins une zone de la pièce de carrosserie (10) ayant une épaisseur constante et apte à avoir une fonction de radome.

## Patentansprüche

1. Karosserieteil (10) für ein Kraftfahrzeug, **dadurch gekennzeichnet, dass** es Folgendes umfasst:
- ein durchsichtiges oder lichtdurchlässiges Element (20), das eine erste Oberfläche (22), die dazu bestimmt ist, der Außenseite des Fahrzeugs zugewandt zu sein, und eine zweite Oberfläche (24), die der ersten Oberfläche gegenüberliegt, umfasst, wobei die zweite Oberfläche (24) mindestens eine erhabene Zone (26) und eine nicht erhabene Zone (28) umfasst;
- mindestens eine erste Beschichtung (30), die wenigstens zum Teil nur die erhabene Zone (26) des durchsichtigen oder lichtdurchlässigen Elements (20) bedeckt,
- mindestens eine zweite Beschichtung (40), die wenigstens zum Teil die nicht erhabene Zone (28) bedeckt, wobei die zweite Beschichtung (40) eine Farbe hat, die von der Farbe der ersten Beschichtung (30) verschieden ist, wobei die erste Beschichtung (30) aus Kunststoff ist,
**dadurch gekennzeichnet, dass** das durchsichtige oder lichtdurchlässige Element (20) mit der ersten Beschichtung (30) umspritzt ist.

2. Karosserieteil (10) nach einem der vorhergehenden Ansprüche, wobei die erste Beschichtung (30) zwischen der zweiten Beschichtung (40) und der zweiten Oberfläche (24) des durchsichtigen oder lichtdurchlässigen Elements (20) eingekapselt ist.

3. Karosserieteil (10) nach einem der vorhergehenden Ansprüche, wobei die zweite Beschichtung (40) mindestens eine Farbschicht umfasst.

4. Karosserieteil (10) nach einem der vorhergehenden Ansprüche, umfassend einen Grundkörper aus Kunststoff, in dem das durchsichtige oder lichtdurchlässige Element (20) umspritzt ist.

5. Frontfläche eines Kraftfahrzeugs, die ein Karosserieteil (10) nach einem der vorhergehenden Ansprüche aufweist.

6. Kraftfahrzeug, ausgestattet mit einem Karosserieteil (10) nach einem der Ansprüche 1 bis 4.

7. Verfahren zur Herstellung eines Karosserieteils für ein Kraftfahrzeug nach einem der Ansprüche 1 bis 4, **dadurch gekennzeichnet, dass** es die folgenden Schritte umfasst:
- Spritzgießen des durchsichtigen oder lichtdurchlässigen Elements (20);
- Umspritzen des durchsichtigen oder lichtdurchlässigen Elements (20) mit der ersten Beschichtung (30);
- Anbringen der zweiten Beschichtung (40).

8. Herstellungsverfahren nach dem vorhergehenden Anspruch, wobei das Anbringen der zweiten Beschichtung (40) durch Sprühauftragung einer Farbschicht auf der zweiten Oberfläche (24) des durchsichtigen oder lichtdurchlässigen Elements (20) realisiert wird.

9. Herstellungsverfahren nach dem vorhergehenden Anspruch, das ferner die folgenden Schritte umfasst:
- Entfernen eines Teils der die zweite Beschichtung (40) bildenden Farbschicht von dem Karosserieteil (10) durch Laserabtragung;
- Anbringen einer dritten Beschichtung, die Zonen bedeckt, wo ein Teil der die zweite Beschichtung (40) bildenden Farbschicht entfernt wurde.

10. Herstellungsverfahren nach Anspruch 7, wobei das Anbringen der zweiten Beschichtung (40) durch Umspritzen des durchsichtigen oder lichtdurchlässigen Elements (20) mit der zweiten Beschichtung (30) realisiert wird.

11. Herstellungsverfahren nach einem der Ansprüche 7 bis 10, ferner umfassend einen Schritt des Anbringens einer dritten Beschichtung, der durch Sprühauftragung einer Farbschicht auf der zweiten Oberfläche (24) des durchsichtigen oder lichtdurchlässigen Elements (20) realisiert wird.

12. Herstellungsverfahren nach einem der Ansprüche 7 bis 10, ferner umfassend einen Schritt des Anbringens einer dritten Beschichtung, der Spritzgießen von Kunststoff, der die zweite Oberfläche (24) und die erste und zweite Beschichtung umspritzt, wobei das Spritzgießen so realisiert wird, dass mindestens eine Zone des Karosserieteils (10) gebildet wird, die eine konstante Dicke hat und imstande ist, als Radarkuppel zu fungieren.

## Claims

1. Body part (10) for a motor vehicle, **characterised in that** it comprises:
- a transparent or translucent element (20) comprising a first surface (22) intended to face towards the outside of the vehicle, and a second surface (24) opposite to the first surface (22), said second surface (24) comprising at least one relief area (26) and one non-relief area (28);
- at least one first coating (30) covering at least partially only the relief area (26) of the transparent or translucent element (20);
- at least one second coating (40) covering at least partially the non-relief area (28), the second coating (40) having a colour different from the colour of the first coating (30), the first coating (30) being made of plastic material, **characterised in that** the first coating (30) is overmoulded on the transparent or translucent element (20).

2. The body part (10) according to one of the preceding claims, wherein the first coating (30) is encapsulated between the second coating (40) and the second surface (24) of the transparent or translucent member (20).

3. The body part (10) according to one of the preceding claims, wherein the second coating (40) comprises at least one layer of paint.

4. The body part (10) according to one of the preceding claims, comprising a main body made of plastic material in which the transparent or translucent element (20) is overmolded.

5. A front face of a motor vehicle comprising a body part (10) according to one of the preceding claims.

6. A motor vehicle equipped with a body part (10) according to one of the preceding claims 1 to 4.

7. A method for manufacturing a motor vehicle body part according to any one of claims 1 to 4, **characterised in that** it comprises the steps of:
- injection moulding of the transparent or translucent element (20);
- overmolding the first coating (30) on the transparent or translucent element (20);
- application of the second coating (40).

8. The manufacturing method according to the preceding claim, wherein the application of the second coating (40) is carried out by spraying a layer of paint on the second surface (24) of the transparent or translucent element (20).

9. The manufacturing method according to the preceding claim which further comprises the steps of:
- removal of a part of the paint layer forming the second coating (40) of the bodywork part (10) by laser etching;
- application of a third coating covering areas where part of the paint layer forming the second coating has been removed (40).

10. The manufacturing method according to claim 7, wherein the application of the second coating (40) is carried out by overmoulding the second coating (30) onto the transparent or translucent element (20).

11. The manufacturing method according to one of claims 7 to 10, further comprising a step of applying a third coating carried out by spraying a layer of paint onto the second surface (24) of the transparent or translucent element (20).

12. The method of manufacture according to one of claims 7 to 10, further comprising a step of applying a third coating by injection of plastic material overmoulding the second surface (24) and the first and second coatings, the injection being carried out in such a way as to form at least one area of the body part (10) having a constant thickness and capable of having a radome function.
